# FASCICULE DE BREVET EUROPEEN

(11) **EP 2 891 822 B1**
(45) Date de publication et mention de la délivrance du brevet: **28.11.2018**
(21) Numéro de dépôt: 14185238.4
(22) Date de dépôt: 17.09.2014
(51) Int. Cl.: G01C 19/02

(54) **Dispositif de transmission de puissance**
Leistungsübertragungsvorrichtung
Power transmission device

(30) Priorité: 17.09.2013 BE 201300616
(43) Date de publication de la demande: 08.07.2015
(73) Titulaire: Mertus, Pierre, 6724 Marbehan (BE)
(72) Inventeur: Mertus, Pierre, 6724 Marbehan (BE)
(74) Mandataire: Gevers Patents

(56) Documents cités:
- EP-A1- 0 021 347
- WO-A2-2005/000623
- CH-A- 132 986
- CH-A- 235 221
- DE-A1- 3 110 649
- DE-C- 565 522

## Description

La présente invention concerne un dispositif de transmission de puissance comprenant un disque monté sur un premier arbre, lequel dispositif comporte également un organe d'entraînement, en particulier un moteur, relié à un organe de transmission de telle façon à ce que l'organe d'entraînement puisse entraîner l'organe de transmission en rotation, lequel organe de transmission est en liaison avec le disque pour lui transmettre sa rotation.

Un tel dispositif est connu du brevet Suisse n° 235 221. Le dispositif connu est utilisé dans des machines outils pour transmettre une puissance à fournir à la machine outil. Il se présente sous forme d'un moteur qui entraîne un organe de transmission formé par un deuxième arbre sur lequel est monté une roue, qui elle même roule sur le disque. Parce que la bande de roulement de la roue est posée sur le disque et parce que l'organe d'entraînement entraîne la roue en rotation, la roue va rouler sur le disque. Cela va entraîner à son tour que par réaction au roulement de la roue sur le disque, ce dernier va être entraîné à tourner à sens inverse de la direction suivant laquelle la roue tourne obtenant ainsi une inversion par le disque du mouvement de la roue.

Un inconvénient du dispositif connu est qu'il n'est souvent pas utilisable dans des constructions simples et peu coûteuses, car pour changer la démultiplication de la transmission il faut changer les roues dentées qui entraînent l'organe de transmission.

On connait également du document WO 2005/000623, divulguant les caractéristiques du préambule de la revendication 1, un dispositif de transmission de puissance à conversion variable mettant en oeuvre des unités gyroscopiques aptes à être positionnées par un dispositif de commande intégré en inclinaison par rapport à un arbre de sortie du dispositif pour opérer une action de précession par rapport à cette arbre, modifiant ainsi la puissance de sortie. Toutefois une telle solution est mécaniquement complexe, et donc coûteuse.

L'invention a pour but de réaliser un dispositif de transmission de puissance qui est fiable et bon marché à construire.

A cette fin un dispositif suivant l'invention est caractérisé en ce que le disque est placé de façon inclinée sur un plateau de telle façon à ce qu'entre le disque et le plateau il y a un point de contact. L'inclinaison du disque par rapport au plateau et le fait que le disque a un point de contact avec le plateau va provoquer que le disque ne va pas tourner à la même vitesse de rotation que l'organe de transmission, ce qui va permettre une démultiplication du mouvement. La relation entre le diamètre du disque, la distance entre l'endroit où l'organe de transmission est posé et le centre du disque vont déterminer le degré de démultiplication entre la vitesse de rotation du disque et celle de l'organe de transmission. On obtient ainsi par des moyens simples et fiables une conversion et une inversion de puissance.

Une première forme de réalisation d'un dispositif suivant l'invention est caractérisée en ce que le premier arbre est relié à un moyen agencé pour permettre une transmission sous un angle. Ainsi l'accouplement avec une machine outil est facilité.

Une deuxième forme de réalisation d'un dispositif suivant l'invention est caractérisée en ce que l'organe de transmission est formé par une roue montée sur un bras porté par le premier arbre, laquelle roue ayant une bande de roulement posée sur le disque. L'usage d'une roue offre une forme de réalisation simple et fiable.

Une troisième forme de réalisation d'un dispositif suivant l'invention est caractérisée en ce que le disque est placé sur le plateau sous un angle situé entre 2 et 45°. Cette plage d'angle permet une large plage de démultiplication de la puissance à transmettre.

De préférence la bande de roulement est en caoutchouc.

Ceci limite un patinage de la roue sur le disque.

Une quatrième forme de réalisation d'un dispositif suivant l'invention est caractérisée en ce que l'organe de transmission est formé par une flasque montée sur le premier arbre. L'usage d'une flasque permet une transmission même pour des couples élevés de l'ordre de plusieurs centaines de Nm.

L'invention sera maintenant décrite à l'aide des dessins qui illustrent un exemple de réalisation d'un dispositif suivant l'invention.

Dans les dessins :
la figure 1 illustre une vue d'ensemble d'une forme de réalisation du dispositif suivant l'invention;

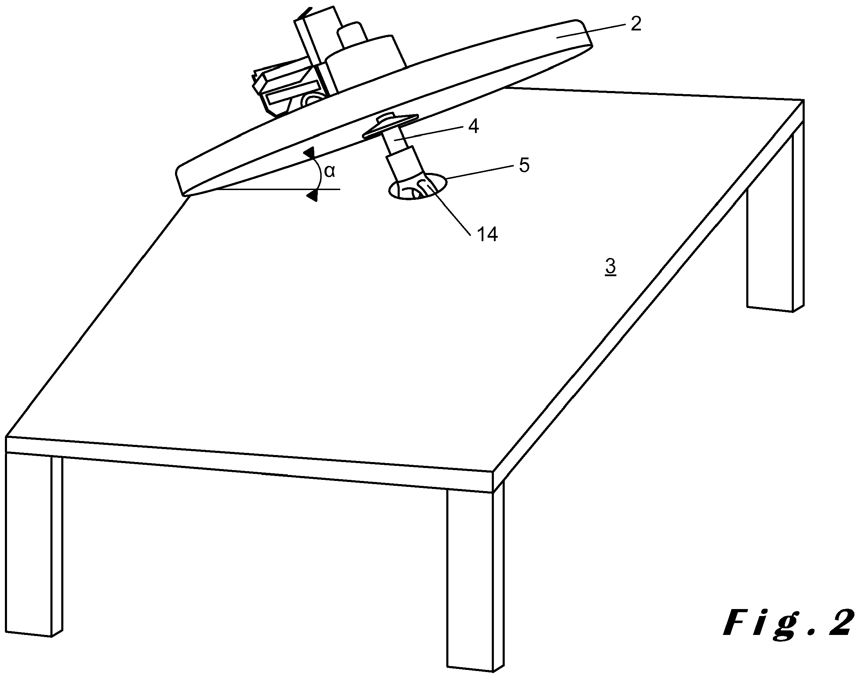

la figure 2 illustre la partie inférieure du dispositif de la figure 1.

Dans les dessins une même référence a été attribuée à un même élément ou à un élément analogue.

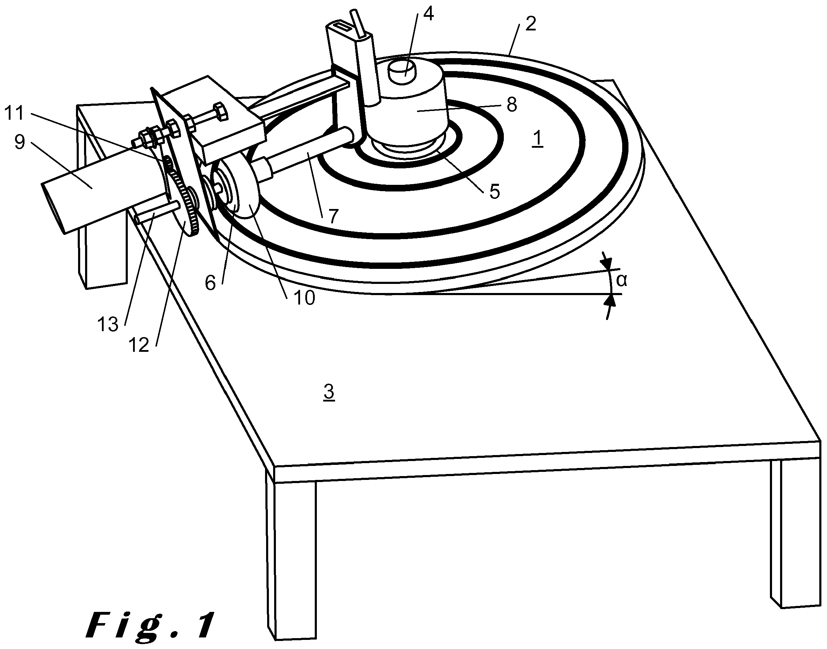

L'exemple de réalisation du dispositif de transmission de puissance illustré à la figure 1 comporte un disque (1) qui de préférence est pourvu d'une bande en caoutchouc (2) appliquée le long du bord du disque. Ce dernier est placé de façon inclinée sur un plateau (3) de telle façon à ce qu'entre le disque et le plateau il y a un point de contact. L'angle de l'inclinaison a entre le plateau et le disque est situé entre 2° et 44. Le fait de placer le disque de façon inclinée sur le plateau a entre autres comme avantage de réduire la friction entre le plateau et le disque. De plus, l'inclinaison du disque contribue à une inversion du sens de la rotation et à une conversion de la puissance, comme il sera décrit plus en détails ci-dessous.

Le disque (1) est monté sur un premier arbre (4) qui traverse le plateau et qui à cette fin est pourvu d'un trou (5). Un moyen (14) pour permettre une transmission sous un angle, comme par exemple un cardan, est monté sur une autre extrémité du premier arbre pour faciliter la transmission de puissance. Comme le disque est incliné, l'arbre, qui est solidaire du disque, est également incliné sous l'angle a.

Une roue (6) est montée sur un bras (7) qui lui est porté par le premier arbre (4). Ceci est de préférence réalisé à l'aide d'une première flasque (8) placée au dessus du disque sur le premier arbre. Le bras étant alors fixé à la flasque. Cette dernière est montée sur un roulement, de préférence un roulement à billes, dans lequel une première extrémité du premier arbre vient se loger. Ainsi un mouvement du bras n'entraîne pas un mouvement du disque. La première flasque est située au centre du disque où le premier arbre traverse le disque.

La roue (6), qui forme un organe de transmission, est reliée à un organe d'entraînement, en particulier un moteur (9), de telle façon à ce que l'organe d'entraînement puisse entraîner la roue en rotation. La roue est pourvue d'une bande de roulement (10), de préférence en caoutchouc pour limiter la friction et le patinage. La bande de roulement de cette roue est posée sur le disque à distance du centre du disque.

Le moteur (9) comporte un deuxième arbre (non repris) sur lequel est de préférence montée une première roue dentée (11) qui prend prise dans une deuxième roue dentée (12). La deuxième roue dentée est montée sur un troisième arbre (13), qui lui-même porte la roue (6). Ainsi par le jeu de la première et de la deuxième roue dentée la rotation du moteur est démultipliée et la deuxième roue dentée entraîne le troisième arbre qui lui entraîne la roue. Le rapport entre la première et la deuxième roue dentée va déterminer la démultiplication entre la vitesse de rotation du moteur et celle de la roue qui roule sur le disque. Ainsi en modifiant les engrenages des premières et deuxièmes roues dentées (11 et 12) on peut modifier la vitesse de rotation de la roue (6) sur le disque.

Lorsque le moteur est alimenté en énergie, comme par exemple de l'électricité lorsque le moteur est électrique, il va entraîner le deuxième arbre qui lui-même va, par l'intermédiaire des roues dentées (11 et 12) entraîner le troisième arbre et donc la roue en rotation. Comme la bande de roulement (10) de la roue (6) est posée sur le disque, la roue va rouler sur le disque lorsqu'elle est entraînée en rotation.

Par réaction au roulement de la roue sur le disque et puisque le disque est placé de façon inclinée sur le plateau (3), le point de contact du disque sur le plateau va se déplacer. Comme le disque est incliné le cercle parcouru par ce point de contact du disque aura un rayon qui est supérieur à celui du disque. La rotation du disque retarde donc sur celle de la roue. La différence entre le rayon du disque et celui du cercle décrit par le point de contact sur le plateau va provoquer un mouvement de rotation du disque dont le sens de rotation est opposé à celui suivant lequel la roue se déplace sur le disque.

Comme le disque est solidaire du premier arbre, la rotation du disque va entraîner celle du premier arbre, qui ainsi va tourner en sens inverse à celui du mouvement de la roue sur le disque. On obtient donc une inversion de direction de la rotation.

Comme la roue est posée à distance du centre du disque et que la rotation du disque retarde sur celle de la roue, une démultiplication et donc une conversion de la puissance va se produire. Cette dernière sera dépendante du diamètre du disque et de la distance entre l'endroit où se trouve la roue et le centre du disque. Ainsi on choisit par le simple choix d'un rayon de disque et de l'angle de l'inclinaison le facteur de conversion.

La démultiplication entre la vitesse à laquelle la roue (6) tourne sur le disque et la vitesse de rotation du premier arbre (4) sera en fonction de plusieurs facteurs, à savoir :
les engrenages entre la première et la deuxième roue dentée qui déterminent la vitesse de la roue; le diamètre de la roue (6);
l'angle a d'inclinaison du disque par rapport au plateau; l'emplacement de la roue (6) sur le disque.

L'angle a d'inclinaison du disque par rapport au plateau joue un rôle dans le sens où plus cet angle est petit, plus le rapport de démultiplication sera élevé. Ainsi par exemple pour un disque incliné sous un angle a=25° et ayant un diamètre de 43 cm avec une roue ayant un rayon de 3,5 cm, on obtient un tour du premier arbre pour 50 tours parcourus par la roue sur le disque. On constatera donc que sans utiliser des engrenages entre la roue et l'arbre on obtient une démultiplication considérable.

Le dispositif suivant l'invention peut également être utilisé comme multiplicateur ou générateur. On peut ainsi entraîner le premier arbre (4), par exemple par une éolienne ou une aube. Ainsi ce sera l'arbre qui va entraîner le disque, qui lui va entraîner le moteur qui peut alors fonctionner comme génératrice de courant électrique.Le dispositif comporte également un bras de manoeuvre agencé pour déplacer le premier arbre (4) en hauteur. Ce bras de manoeuvre est logé en-dessous du plateau (3) et couplé au premier arbre à l'aide d'un autre roulement à billes. Ce bras de manoeuvre est fixé au plateau à l'aide d'une attache par rapport à laquelle le bras pivote. Ainsi le bras de manoeuvre est un bras de pivot qui en le faisant pivoter par rapport à l'attache permet de lever et de descendre le premier bras. Etant entendu que le disque est monté sur le premier arbre, le changement en hauteur de l'arbre va faire varier l'angle d'inclinaison a du disque.

## Revendications

1. Dispositif de transmission de puissance comprenant un disque (1) monté sur un premier arbre (4), lequel dispositif comporte également un organe d'entraînement, en particulier un moteur (9), relié à un organe de transmission de telle façon à ce que l'organe d'entraînement puisse entraîner l'organe de transmission en rotation, lequel organe de transmission est en liaison avec le disque (1) pour lui transmettre sa rotation, dans lequel le premier arbre (4) est relié à un moyen (14) agencé pour permettre une transmission sous un angle, **caractérisé en ce que** le disque (1) est placé de façon inclinée sur un plateau (3) de telle façon à ce que entre le disque (1) et le plateau (3) il y a un point de contact

2. Dispositif suivant la revendication 1, **caractérisé en ce que** le premier arbre (4) traverse le plateau (3).

3. Dispositif suivant l'une des revendications 1 à 2, **caractérisé en ce que** l'organe de transmission est formé par une roue (6) montée sur un bras (7) porté par le premier arbre (4), laquelle roue ayant une bande de roulement (10) posée sur le disque (1).

4. Dispositif suivant la revendication 3, **caractérisé en ce que** l'organe de transmission comporte un deuxième arbre relié à un arbre d'entraînement de la roue.

5. Dispositif suivant l'une des revendications 3 ou 4, **caractérisé en ce que** la bande de roulement (10) est en caoutchouc.

6. Dispositif suivant l'une des revendications 1 à 5, **caractérisé en ce que** le disque (1) est placé sur le plateau (3) sous un angle (α) situé entre 2 et 45°.

7. Dispositif suivant l'une des revendications 1 à 6, **caractérisé en ce que** le premier arbre (4) est relié à un bras de manoeuvre agencé pour déplacer le premier arbre (4) en hauteur.

## Patentansprüche

1. Vorrichtung zur Leistungsübertragung, umfassend eine Scheibe (1), die auf einer ersten Welle (4) montiert ist, wobei die Vorrichtung ebenfalls ein Antriebsorgan, insbesondere einen Motor (9), beinhaltet, der so mit einem Übertragungsorgan verbunden ist, dass das Antriebsorgan das Übertragungsorgan in Drehung antreiben kann, wobei das Übertragungsorgan mit der Scheibe (1) in Verbindung ist, um ihr seine Drehung zu übertragen, wobei die erste Welle (4) mit einem Mittel (14) verbunden ist, das angeordnet ist, um eine Übertragung unter einem Winkel zu ermöglichen, **dadurch gekennzeichnet, dass** die Scheibe (1) so auf geneigte Weise auf einer Platte (3) platziert ist, dass zwischen der Scheibe (1) und der Platte (3) ein Kontaktpunkt besteht.

2. Vorrichtung nach Anspruch 1, **dadurch gekennzeichnet, dass** die erste Welle (4) die Platte (3) durchquert.

3. Vorrichtung nach einem der Ansprüche 1 bis 2, **dadurch gekennzeichnet, dass** das Übertragungsorgan durch ein Rad (6) gebildet wird, das auf einem Arm (7) montiert ist, der durch die erste Welle (4) getragen wird, wobei das Rad ein Reifenprofil (10) aufweist, das auf der Scheibe (1) aufliegt.

4. Vorrichtung nach Anspruch 3, **dadurch gekennzeichnet, dass** das Übertragungsorgan eine zweite Welle beinhaltet, die mit einer Antriebswelle des Rades verbunden ist.

5. Vorrichtung nach einem der Ansprüche 3 oder 4, **dadurch gekennzeichnet, dass** das Reifenprofil (10) aus Gummi besteht.

6. Vorrichtung nach einem der Ansprüche 1 bis 5, **dadurch gekennzeichnet, dass** die Scheibe (1) auf der Platte (3) unter einem Winkel (α), der zwischen 2 und 45° liegt, platziert ist.

7. Vorrichtung nach einem der Ansprüche 1 bis 6, **dadurch gekennzeichnet, dass** die erste Welle (4) mit einem Manövrierarm verbunden ist, der angeordnet ist, um die erste Welle (4) in Höhenrichtung zu verschieben.

## Claims

1. Device for transmitting power comprising a disc (1) mounted on a first shaft (4), said device also comprising a drive member, in particular a motor (9), connected to a transmission member such that the drive member can drive the transmission member in rotation, said transmission member being connected to the disc (1) to transmit its rotation onto it, wherein the first shaft (4) is connected to a means (14) arranged to enable a transmission under an angle, **characterised in that** the disc (1) is placed tilted on a plate (3) such that between the disc (1) and the plate (3), there is a contact point.

2. Device according to claim 1, **characterised in that** the first shaft (4) passes through the plate (3).

3. Device according to one of the claims 1 to 2, **characterised in that** the transmission member is formed by a wheel (6) mounted on an arm (7) carried by the first shaft (4), said wheel having a tread (10) placed on the disc (1).

4. Device according to claim 3, **characterised in that** the transmission member comprises a second shaft connected to a drive shaft of the wheel.

5. Device according to one of the claims 3 or 4, **characterised in that** the tread (10) is made of rubber.

6. Device according to one of the claims 1 to 5, **characterised in that** the disc (1) is placed on the plate (3) under an angle (α) of between 2 and 45°.

7. Device according to one of the claims 1 to 6, **characterised in that** the first shaft (4) is connected to an operating arm, arranged to move the first shaft (4) in height.
